# EUROPEAN PATENT SPECIFICATION

(11) **EP 3 804 931 B1**
(45) Date of publication and mention of the grant of the patent: **10.09.2025**
(21) Application number: 19811596.6
(22) Date of filing: 28.05.2019
(51) Int. Cl.: B28B 11/00, B28B 11/04, B41J 3/407, B41J 11/00

(54) **PRINTING AND GLAZING INTEGRATED PRINTER**
DRUCKER MIT INTEGRIERTEM DRUCKEN UND VERGLASEN
IMPRIMANTE INTÉGRÉE D'IMPRESSION ET DE GLAÇAGE

(30) Priority: 29.05.2018 CN 201810533762
(43) Date of publication of application: 14.04.2021
(73) Proprietor: GuangZhou KingTau Machinery&Electronics Equipment Co., Ltd., Guangzhou, Guangdong 511340 (CN)
(72) Inventor: TANG, Zhenhua, Guangzhou, Guangdong 511340 (CN); WANG, Jingang, Guangzhou, Guangdong 511340 (CN)
(74) Representative: Puschmann Borchert Kaiser Klettner Patentanwälte Partnerschaft mbB
(86) International application number: PCT/CN2019/088767
(87) International publication number: WO 2019/228335

(56) References cited:
- EP-A1- 2 404 724
- EP-A1- 3 581 385
- WO-A1-2014/047515
- WO-A1-2016/203299
- WO-A1-2017/021825
- CN-A- 103 936 460
- CN-A- 107 235 632
- CN-A- 107 814 588
- CN-A- 108 544 647
- CN-U- 206 718 727
- CN-U- 208 232 031
- KR-A- 20030 009 905

## Description

### Technical Field

The present invention relates to the field of ceramic printers, and in particular to a printing-glazing integrated printer.

### Background art

Ceramic tiles are plate or bulk ceramic articles made from clay or other inorganic non-metal materials after manufacturing processes such as shaping and sintering, and are used for decorating and protecting walls and floors of buildings and constructions.

In order to meet various requirements of people, a ceramic-tile green body after shaping often needs to be processed through a printing process, and then is required to be coated with a layer of protective glaze in order to improve the wear resistance, slip resistance, and self-cleaning performance of the ceramic tile. However, in the prior art, the glaze is applied by adopting methods of waterfall processing and glaze spraying. The waterfall processing is a process of pumping glaze slurry into a high-level tank, and then the glaze slurry evenly covers the surface of the green body like a waterfall through a smooth bell cover by means of the buffering effects of the glaze trough and the screen mesh. The glaze spraying is a process of spraying the glaze slurry into a mist to be applied to the surface of the green body under the action of pressure through compressed air by using a spray gun. Both the waterfall processing and the glaze spraying are inseparable from manual experience of controlling the applied amount of glaze. When the amount of glaze is applied too little, the glaze layer is too thin to be effective, and when the amount of glaze is applied too much, it is unfavorable to control costs and guarantee the evenness of the glaze layer. In order to avoid firing crack of the green body, the applied amount of glaze should reach at least around 400g/m². In addition, apart from the glaze applied to the surface of the green body, a large amount of glaze is wasted and discharged into the environment during the process. Whether the glazing process or the discharging process causes serious pollution to the environment and causes harm to the health of the operator.

In the prior art, the green body after shaping needs to be processed through glazing and printing processes before entering a furnace for firing to obtain a finished product. Each process is completed by a different device, so that the production line is complex and tedious and is disadvantageous for quality control and improvement.

Document WO-A1-2016/203299 discloses a ceramic printer in accordance with the preamble of claim 1.

### Summary of the Invention

In view of the above, the present invention provides a printing-glazing integrated printer in order to overcome at least one of the deficiencies of the prior art, thereby changing the conventional glazing mode, simplifying the production line, improving the automation degree of ceramic tile printing, solving the problem that conventional glazing is highly dependent on manual experience, and reducing the influence of the production process on the environment.

In order to solve the above technical problems, the present invention adopts the technical solutions as presented in independent claim 1.

The present invention adopts printing mode to replace traditional waterfall processing and glaze spraying to achieve refined production, so that the usage amount of the glaze is greatly reduced and the utilization rate of the glaze reaches almost 100% without generating a large amount of waste, and the glazing process is accurate to the micron level to avoid pollution on the working environment. The printing processing and the glazing processing are integrated on the same printer, a print medium is conveyed by the same conveying platform, printing and glazing can be completed once the print medium is positioned well, so that the printing area and the glazing area are highly overlapped, and the printing quality is improved. In the present invention, glazing is the last procedure as a surface treatment procedure for applying a liquid treating agent. If errors due to blocking of a spray hole cause blank spots or blank lines to appear on a surface layer of a green body, the ceramic tile may have an obvious defect after firing and shaping, resulting in a waste product. According to the present invention, the glazing system includes at least a pair of full-width print channels, and the glaze is divided into two parts and is printed from each of the pair of full-width print channels onto the same position on the surface of the print medium respectively. Even if a certain spray hole in one of the pair of full-width print channels malfunctions and fails to cover the surface of the green body corresponding to the spray hole with overglaze or effect glaze, it can be compensated through printing of the other of the full-width print channels, thereby reducing the probability of zero glaze on a portion of the print media surfaces.

Ceramic tile printing often uses inks with different colors, functions and effects. In order to meet printing needs, the printing system includes a plurality of printing modules arranged side by side in a transmission direction above the conveying platform, and each printing module is used for printing with a different ink. The glazing process often uses different glazes, such as effect glaze, metal glaze and protective glaze. For this purpose, the glazing system includes a plurality of glazing modules arranged side by side in a transmission direction above the conveying platform, each glazing module is provided with a pair of full-width print channels, and each module can complete printing with certain amount of glaze.

Preferably, the printing system includes 7 to 9 printing modules arranged side by side in the transmission direction above the conveying platform, the glazing system includes 3 to 8 glazing modules arranged side by side in the transmission direction above the conveying platform, and each glazing module is provided with a pair of full-width print channels.

The requirements for a distance between a print head on the printing module and the surface of the print medium and a distance between a print head on the glazing module and the surface of the print medium are not the same. In order to facilitate adjusting the heights of the printing module and the glazing module, a supporting frame that spans the printing area and the glazing area is provided above the conveying platform. The printing system further includes a printing carriage frame connected to the supporting frame in an up-and-down manner, and the printing modules are connected to the printing carriage frame in parallel. The glazing system further includes a glazing carriage frame connected to the supporting frame in an up-and-down manner, and the glazing modules are connected to the glazing carriage frame in parallel. All the printing modules are arranged in parallel on the printing carriage frame and are driven by the printing carriage frame to move in a direction vertical to the conveying platform, all the glazing modules are arranged in parallel on the glazing carriage frame and are driven by the glazing carriage frame to move in the direction vertical to the conveying platform, so that it is easy for the printer to control the heights of the printing modules and the glazing modules in a unified manner, and the time for installation and distance adjustment is saved.

Specifically, the printing carriage frame is provided with a printing lifting frame, the supporting frame is provided with a first screw rod that supports the printing lifting frame; the glazing carriage frame is provided with a glazing lifting frame, the supporting frame is provided with a second screw rod that supports the glazing lifting frame.

When the number of the modules becomes larger, in order to guarantee the stability of elevating movement, the supporting frame is provided with two first screw rods arranged at a distance, and a first transmission mechanism used for transmitting a synchronous action is provided between the first screw rods; and the supporting frame is provided with two second screw rods arranged at a distance, and a second transmission mechanism used for transmitting a synchronous action is provided between the second screw rods.

Negative pressure adsorption mechanisms are provided between two adjacent printing modules or two adjacent glazing modules or between the printing modules and the glazing modules, so as to facilitate absorbing ink steam or glaze steam in the printing area and the glazing area rather than influencing the printing effect.

Compared with the prior art, the present invention has the following beneficial effects. The present invention adopts printing mode to replace traditional waterfall processing and glaze spraying to achieve refined production, so that the usage amount of the glaze is greatly reduced and the utilization rate of the glaze reaches almost 100% without generating a large amount of waste, and the glazing process is accurate to the micron level to avoid pollution on the working environment. The printing processing and the glazing processing are integrated on the same printer, the print medium is conveyed by the same conveying platform, printing and glazing can be completed once the print medium is positioned well, so that the printing area and the glazing area are highly overlapped, and the printing quality is improved. In the present invention, glazing is the last procedure as a surface treatment procedure for applying the liquid treating agent. If errors due to blocking of a spray hole cause blank spots or blank lines to appear on a surface layer of a green body, the ceramic tile may have an obvious defect after firing and shaping, resulting in a waste product. According to the present invention, the glazing system includes at least a pair of full-width print channels, and the glaze is divided into two parts and is printed from each of the pair of full-width print channels onto the same position on the surface of the print medium respectively. Even if a certain spray hole in one of the pair of full-width print channels malfunctions and fails to cover the surface of the green body corresponding to the spray hole with overglaze or effect glaze, it can be compensated through printing of the other of the full-width print channels, thereby reducing the probability of zero glaze on a portion of the print media surfaces.

### Brief Description of the Drawings

FIG. 1 is a schematic structural view of a printing-glazing integrated printer in Embodiment 1;
FIG. 2 is a schematic structural view of a printing system and a glazing system in Embodiment 1;
FIG. 3 is a rear view of the printing system and the glazing system in Embodiment 1;
FIG. 4 is a schematic structural view of a printing-glazing integrated printer in Embodiment 2;
FIG. 5 is an enlarged view of a section C in FIG. 4; and
FIG. 6 is an enlarged view of a section D in FIG. 4.

Reference Numerals: printing area A, glazing area B, conveying platform 100, printing system 200, printing carriage frame 210, printing lifting frame 211, printing modules 220, glazing system 300, glazing carriage frame 310, glazing lifting frame 311, glazing modules 320, supporting frame 400, first screw rod(s) 410, first transmission mechanism 411, second screw rod(s) 420, second transmission mechanism 421, and negative pressure adsorption mechanisms 500.

### Embodiments

The drawings are for illustration purpose only and are not intended to limit the present invention. Some components in the drawings are omitted, enlarged or reduced for better illustrating the embodiments, and sizes of these components do not represent that of actual products. For those skilled in the art, it will be understood that some known structures in the drawings and descriptions thereof may be omitted. The description of positional relationship in the drawings is for illustration purpose only and is not intended to limit the present invention. The present invention will be further described below in detail with reference to specific embodiments.

### Embodiment 1

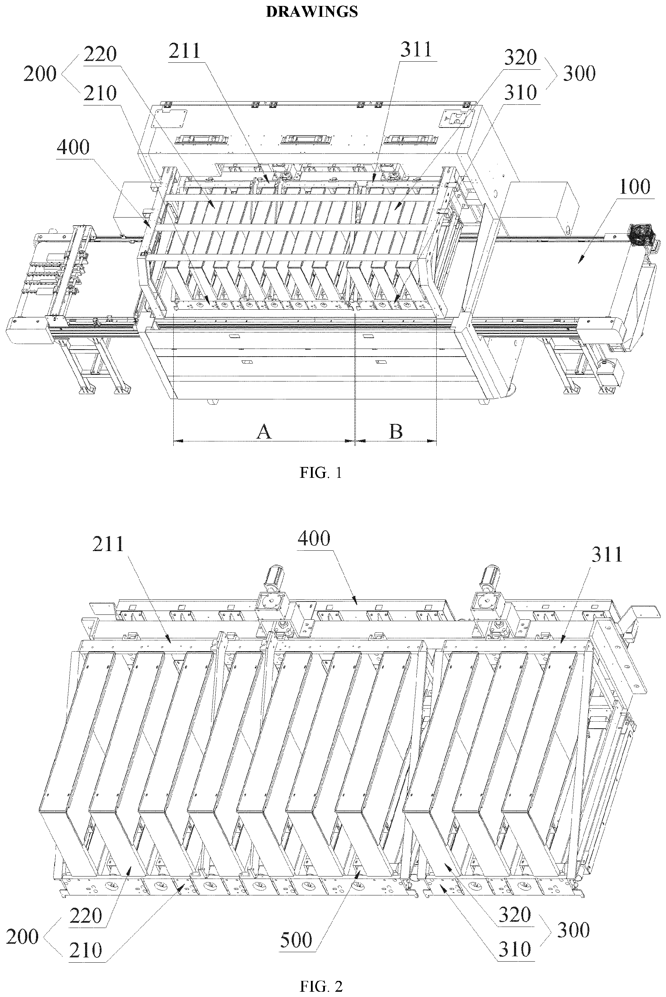

As shown in FIG. 1, a printing-glazing integrated printer is provided and is divided into a printing area A and a glazing area B, and includes a conveying platform 100 that sequentially passes through the printing area A and the glazing area B, a printing system 200 provided in the printing area A and above the conveying platform 100, and a glazing system 300 provided in the glazing area B and above the conveying platform 100, in which the glazing system 300 includes at least a pair of full-width print channels.

The present invention adopts printing mode to replace traditional waterfall processing and glaze spraying to achieve refined production, so that the usage amount of the glaze is greatly reduced and the utilization rate of the glaze reaches almost 100% without generating a large amount of waste, and the glazing process is accurate to the micron level to avoid pollution on the working environment. The printing processing and the glazing processing are integrated on the same printer, a print medium is conveyed by the same conveying platform 100, printing and glazing can be completed once the print medium is positioned well, so that the printing area A and the glazing area B are highly overlapped, and the printing quality is improved. In the present invention, glazing is the last procedure as a surface treatment procedure for applying a liquid treating agent. If errors due to blocking of a spray hole cause blank spots or blank lines to appear on a surface layer of a green body, the ceramic tile may have an obvious defect after firing and shaping, resulting in a waste product. According to the present invention, the glazing system 300 includes at least a pair of full-width print channels, and the glaze is divided into two parts and is printed from each of the pair of full-width print channels onto the same position on the surface of the print medium respectively. Even if a certain spray hole in one of the pair of full-width print channels malfunctions and fails to cover the surface of the green body corresponding to the spray hole with overglaze or effect glaze, it can be compensated through printing of the other of the full-width print channels, thereby reducing the probability of zero glaze on a portion of the print media surfaces.

Ceramic tile printing often uses inks with different colors, functions and effects. In order to meet printing needs, the printing system 200 includes a plurality of printing modules 220 arranged side by side in a transmission direction above the conveying platform 100, and each printing module 220 is used for printing with a different ink. The glazing process often uses different glazes, such as effect glaze, metal glaze and protective glaze. For this purpose, the glazing system 300 includes a plurality of glazing modules 320 arranged side by side in a transmission direction above the conveying platform 100, each glazing module 320 is provided with a pair of full-width print channels, and each module can complete printing with certain amount of glaze.

As shown in FIG. 2, the printing and glazing processes have different requirements for a distance between a print head on the printing module 220 and the surface of the print medium and a distance between a print head on the glazing module 320 and the surface of the print medium. In order to facilitate adjusting the heights of the printing modules 220 and the glazing modules 320, a supporting frame 400 that spans the printing area A and the glazing area B is provided above the conveying platform 100. The printing system 200 further includes a printing carriage frame 210 connected to the supporting frame 400 in an up-and-down manner, and the printing modules 220 are connected to the printing carriage frame 210 in parallel. The glazing system 300 further includes a glazing carriage frame 310 connected to the supporting frame 400 in an up-and-down manner, and the glazing modules 320 are connected to the glazing carriage frame 310 in parallel. All the printing modules 220 are arranged in parallel on the printing carriage frame 210 and are driven by the printing carriage frame 210 to move in a direction vertical to the conveying platform 100, all the glazing modules 320 are arranged in parallel on the glazing carriage frame 310 and are driven by the glazing carriage frame 310 to move in the direction vertical to the conveying platform 100, so that it is easy for the printer to control the heights of the printing modules 220 and the glazing modules 320 in a unified manner, and the time for installation and distance adjustment is saved.

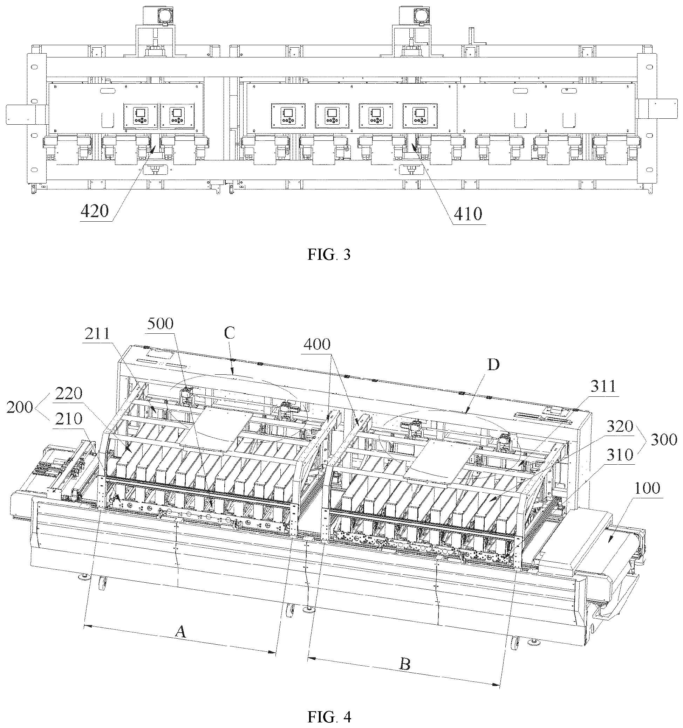

Specifically, as shown in FIG. 3, the printing carriage frame 210 is provided with a printing lifting frame 211, the supporting frame 400 is provided with a first screw rod 410 that supports the printing lifting frame 211; the glazing carriage frame 310 is provided with a glazing lifting frame 311, the supporting frame 400 is provided with a second screw rod 420 that supports the glazing lifting frame 311.

Negative pressure adsorption mechanisms are provided between two adjacent printing modules 220 or two adjacent glazing modules 320 or between the printing modules 220 and the glazing modules 320, so as to facilitate absorbing ink steam or glaze steam in the printing area A and the glazing area B rather than influencing the printing effect.

### Embodiment 2

As shown in FIG. 4, a printing-glazing integrated printer is provided and is divided into a printing area A and a glazing area B, and includes a conveying platform 100 that sequentially passes through the printing area A and the glazing area B, a printing system 200 provided in the printing area A and above the conveying platform 100, and a glazing system 300 provided in the glazing area B and above the conveying platform 100, in which the glazing system 300 includes at least a pair of full-width print channels.

The present invention adopts printing mode to replace traditional waterfall processing and glaze spraying to achieve refined production, so that the usage amount of the glaze is greatly reduced and the utilization rate of the glaze reaches almost 100% without generating a large amount of waste, and the glazing process is accurate to the micron level to avoid pollution on the working environment. The printing processing and the glazing processing are integrated on the same printer, a print medium is conveyed by the same conveying platform 100, printing and glazing can be completed once the print medium is positioned well, so that the printing area A and the glazing area B are highly overlapped, and the printing quality is improved. In the present invention, glazing is the last procedure as a surface treatment procedure for applying a liquid treating agent. If errors due to blocking of a spray hole cause blank spots or blank lines to appear on a surface layer of a green body, the ceramic tile may have an obvious defect after firing and shaping, resulting in a waste product. According to the present invention, the glazing system 300 includes at least a pair of full-width print channels, and the glaze is divided into two parts and is printed from each of the pair of full-width print channels onto the same position on the surface of the print medium respectively. Even if a certain spray hole in one of the pair of full-width print channels malfunctions and fails to cover the surface of the green body corresponding to the spray hole with overglaze or effect glaze, it can be compensated through printing of the other of the full-width print channels, thereby reducing the probability of zero glaze on a portion of the print media surfaces.

Ceramic tile printing often uses inks with different colors, functions and different effects. In order to meet printing needs, the printing system 200 includes a plurality of printing modules 220 arranged side by side in a transmission direction above the conveying platform 100, and each printing module 220 is used for printing with a different ink. The glazing process often uses different glazes, such as effect glaze, metal glaze and protective glaze. For this purpose, the glazing system 300 includes a plurality of glazing modules 320 arranged side by side in a transmission direction above the conveying platform 100, each glazing module 320 is provided with a pair of full-width print channels, and each module can complete printing with certain amount of glaze.

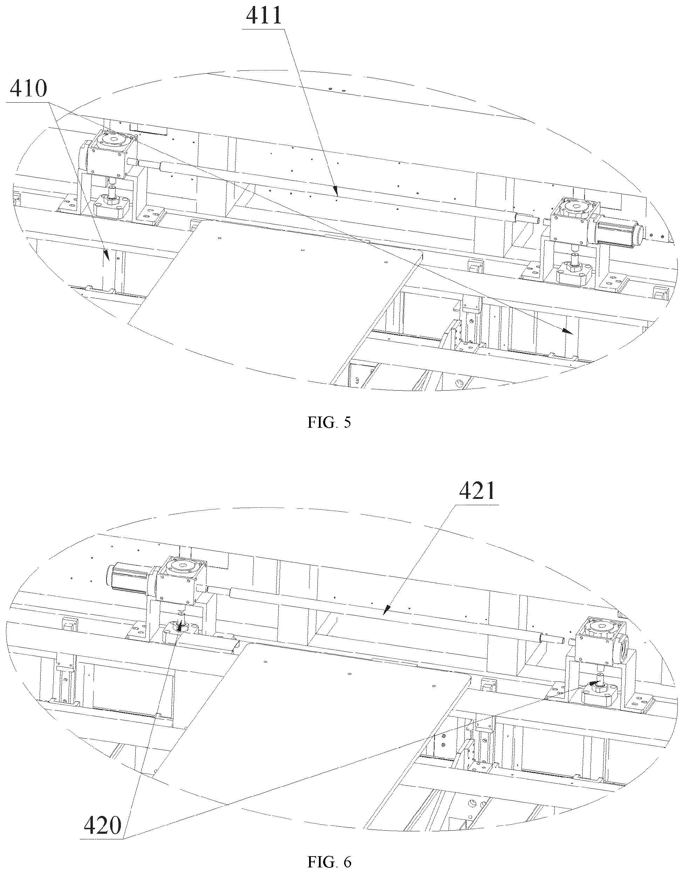

As shown in FIG. 5, the printing and glazing processes have different requirements for a distance between a print head on the printing module 220 and the surface of the print medium and a distance between a print head on the glazing module 320 and the surface of the print medium. In order to facilitate adjusting the heights of the printing modules 220 and the glazing modules 320, a supporting frame 400 that spans the printing area A and the glazing area B is provided above the conveying platform 100. The printing system 200 further includes a printing carriage frame 210 connected to the supporting frame 400 in an up-and-down manner, and the printing modules 220 are connected to the printing carriage frame 210 in parallel. The glazing system 300 further includes a glazing carriage frame 310 connected to the supporting frame 400 in an up-and-down manner, and the glazing modules 320 are connected to the glazing carriage frame 310 in parallel. All the printing modules 220 are arranged in parallel on the printing carriage frame 210 and are driven by the printing carriage frame 210 to move in a direction vertical to the conveying platform 100, all the glazing modules 320 are arranged in parallel on the glazing carriage frame 310 and are driven by the glazing carriage frame 310 to move in the direction vertical to the conveying platform 100, so that it is easy for the printer to control the heights of the printing modules 220 and the glazing modules 320 in a unified manner, and the time for installation and distance adjustment is saved.

Specifically, as shown in FIG. 6, the printing carriage frame 211 is provided with a printing lifting frame 211, the supporting frame 400 is provided with first screw rods 410 that support the printing lifting frame 211; the glazing carriage frame 310 is provided with a glazing lifting frame 311, the supporting frame 400 is provided with second screw rods 420 that support the glazing lifting frame 311. The supporting frame 400 is provided with two first screw rods 410 arranged at a distance, and a first transmission mechanism 411 used for transmitting a synchronous action is provided between the first screw rods 410; the supporting frame 400 is provided with two second screw rods 420 arranged at a distance, and a second transmission mechanism 421 used for transmitting a synchronous action is provided between the second screw rods 420.

Negative pressure adsorption mechanisms are provided between two adjacent printing modules 220 or two adjacent glazing modules 320 or between the printing modules 220 and the glazing modules 320, so as to facilitate absorbing ink steam or glaze steam in the printing area A and the glazing area B rather than influencing the printing effect.

## Claims

1. A ceramic printer, comprising a printing area (A), a conveying platform (100) for conveying a print medium and a printing system (200) that lies in the printing area (A) and above the conveying platform (100) and that is configured for printing an ink onto a surface of the print medium, the printer further comprises a glazing area (B) and a glazing system (300) that lies in the glazing area (B) and above the conveying platform (100), wherein the conveying platform (100) sequentially passes through the printing area (A) and the glazing area (B), wherein the glazing system (300) is configured for printing a glaze onto the surface of the print medium, wherein the printing system (200) includes a plurality of printing modules (220) arranged side by side along a transmission direction of the print medium above the conveying platform (100), and the glazing system (300) includes a plurality of glazing modules (320) arranged side by side along the transmission direction of the print medium above the conveying platform (100), each glazing module (320) is provided with a pair of full-width print channels, wherein each glazing module is configured to divide the glaze into two parts to print the glaze from each of the pair of full-width print channels onto the same position on the surface of the print medium respectively; **characterized in that** the ceramic printer further comprises a supporting frame (400) that spans the printing area (A) and the glazing area (B) and is provided above the conveying platform (100), the printing system (200) further includes a printing carriage frame (210) connected to the supporting frame (400), the printing carriage frame (210) is movable up and down relative to the supporting frame (400) in the direction orthogonal to the conveying platform (100), the printing modules (220) are connected to the printing carriage frame (210) in parallel and are configured to be simultaneously driven by the printing carriage frame (210) to move in a direction orthogonal to the conveying platform; the glazing system (300) further includes a glazing carriage frame (310) connected to the supporting frame (400), the glazing carriage frame (310) is movable up and down relative to the supporting frame (400) in the direction orthogonal to the conveying platform (100), and the glazing modules (320) are connected to the glazing carriage frame (310) in parallel and are configured to be simultaneously driven by the glazing carriage frame (310) to move in the direction orthogonal to the conveying platform (100).

2. The printer according to claim 1, **characterized in that** the printing system (200) includes 7 to 9 printing modules (220) arranged side by side along the transmission direction above the conveying platform (100), the glazing system (300) includes 3 to 8 glazing modules (320) arranged side by side along the transmission direction above the conveying platform (100), and each glazing module is provided with a pair of full-width print channels.

3. The printer according to claim 1, **characterized in that** the printing carriage frame (210) is provided with a printing lifting frame (211), the supporting frame (400) is provided with a first screw rod (410) that supports the printing lifting frame (211); the glazing carriage frame (310) is provided with a glazing lifting frame (311), and the supporting frame (400) is provided with a second screw rod (420) that supports the glazing lifting frame (311).

4. The printer according to claim 3, **characterized in that** the supporting frame (400) is provided with two first screw rods (410) arranged at a distance, and a first transmission mechanism (411) used for transmitting a synchronous action is provided between the two first screw rods (410); the supporting frame (400) is provided with two second screw rods (420) arranged at a distance, and a second transmission mechanism (421) used for transmitting a synchronous action is provided between the two second screw rods (420).

5. The printer according to any one of claims 1 to 4, **characterized in that** negative pressure adsorption mechanisms (500) are provided between two adjacent printing modules (220) or two adjacent glazing modules (320) or between the printing modules (220) and the glazing modules (320).

## Patentansprüche

1. Keramikdrucker, umfassend einen Druckbereich (A), eine Förderplattform (100) zum Fördern eines Druckmediums sowie ein im Druckbereich (A) und oberhalb der Förderplattform (100) angeordnetes Drucksystem (200), das zum Drucken einer Tinte auf eine Oberfläche des Druckmediums eingerichtet ist, wobei der Drucker ferner einen Verglasungsbereich (B) und ein im Verglasungsbereich (B) und oberhalb der Förderplattform (100) angeordnetes Verglasungssystem (300) umfasst, wobei die Förderplattform (100) nacheinander den Druckbereich (A) und den Verglasungsbereich (B) durchläuft, wobei das Verglasungssystem (300) zum Drucken einer Glasur auf die Oberfläche des Druckmediums ausgebildet ist, wobei das Drucksystem (200) eine Mehrzahl von entlang einer Transportrichtung des Druckmediums oberhalb der Förderplattform (100) nebeneinander angeordneten Druckmodulen (220) umfasst, wobei das Verglasungssystem (300) eine Mehrzahl von entlang der Transportrichtung des Druckmediums oberhalb der Förderplattform (100) nebeneinander angeordneten Verglasungsmodulen (320) umfasst, wobei jedes Verglasungsmodul (320) mit einem Paar von Druckkanälen in voller Breite versehen ist, wobei jedes Verglasungsmodul derart ausgestaltet ist, dass es die Glasur in zwei Teile aufteilt, um diese jeweils über die beiden Druckkanäle auf dieselbe Position auf der Oberfläche des Druckmediums aufzubringen, **dadurch gekennzeichnet, dass** der Keramikdrucker ferner einen sich über den Druckbereich (A) und den Verglasungsbereich (B) erstreckenden, oberhalb der Förderplattform (100) angeordneten Tragrahmen (400) umfasst, wobei das Drucksystem (200) ferner einen mit dem Tragrahmen (400) verbundenen Druckwagensupport (210) umfasst, der relativ zum Tragrahmen (400) in einer zur Förderplattform (100) orthogonalen Richtung höhenverstellbar ist, wobei die Druckmodule (220) parallel am Druckwagensupport (210) befestigt sind und derart ausgestaltet sind, dass sie durch den Druckwagensupport (210) gemeinsam in einer Richtung senkrecht zur Förderplattform (100) bewegbar sind, und wobei das Verglasungssystem (300) ferner einen mit dem Tragrahmen (400) verbundenen Verglasungswagensupport (310) umfasst, der relativ zum Tragrahmen (400) in einer zur Förderplattform (100) orthogonalen Richtung höhenverstellbar ist, wobei die Verglasungsmodule (320) parallel am Verglasungswagensupport (310) befestigt sind und derart ausgestaltet sind, dass sie durch den Verglasungswagensupport (310) gemeinsam in einer Richtung senkrecht zur Förderplattform (100) bewegbar sind.

2. Drucker nach Anspruch 1, **dadurch gekennzeichnet, dass** das Drucksystem (200) 7 bis 9 Druckmodule (220) umfasst, die entlang der Transportrichtung nebeneinander oberhalb der Förderplattform (100) angeordnet sind, dass das Verglasungssystem (300) 3 bis 8 Verglasungsmodule (320) umfasst, die ebenfalls entlang der Transportrichtung nebeneinander oberhalb der Förderplattform (100) angeordnet sind, und dass jedes Verglasungsmodul mit einem Paar von Druckkanälen in voller Breite versehen ist.

3. Drucker nach Anspruch 1, **dadurch gekennzeichnet, dass** der Druckwagensupport (210) mit einem druckseitigen Hubrahmen (211) versehen ist, dass der Tragrahmen (400) mit einer ersten Gewindestange (410) versehen ist, die den druckseitigen Hubrahmen (211) trägt, dass der Verglasungswagensupport (310) mit einem verglasungsseitigen Hubrahmen (311) versehen ist, und dass der Tragrahmen (400) mit einer zweiten Gewindestange (420) versehen ist, die den verglasungsseitigen Hubrahmen (311) trägt.

4. Drucker nach Anspruch 3, **dadurch gekennzeichnet, dass** der Tragrahmen (400) mit zwei in einem Abstand zueinander angeordneten ersten Gewindestangen (410) versehen ist und dass zwischen den beiden ersten Gewindestangen (410) ein erstes Übertragungsmechanismus (411) vorgesehen ist, der zur Übertragung einer synchronen Bewegung dient, und dass der Tragrahmen (400) mit zwei in einem Abstand zueinander angeordneten zweiten Gewindestangen (420) versehen ist und zwischen den beiden zweiten Gewindestangen (420) ein zweites Übertragungsmechanismus (421) vorgesehen ist, der zur Übertragung einer synchronen Bewegung dient.

5. Drucker nach einem der Ansprüche 1 bis 4, **dadurch gekennzeichnet, dass** zwischen zwei benachbarten Druckmodulen (220) oder zwei benachbarten Verglasungsmodulen (320) oder zwischen den Druckmodulen (220) und den Verglasungsmodulen (320) Unterdruck-Adsorptionsmechanismen (500) vorgesehen sind.

## Revendications

1. Imprimante céramique, comprenant une zone d'impression (A), une plateforme de transport (100) destinée à transporter un support d'impression et un système d'impression (200) qui se trouve dans la zone d'impression (A) et au-dessus de la plateforme de transport (100) et qui est configuré pour imprimer une encre sur une surface du support d'impression, l'imprimante comprend en outre une zone de glaçage (B) et un système de glaçage (300) qui se trouve dans la zone de glaçage (B) et au-dessus de la plateforme de transport (100), la plateforme de transport (100) passant séquentiellement par la zone d'impression (A) et la zone de glaçage (B), le système de glaçage (300) étant configuré pour imprimer une glaçure sur la surface du support d'impression, le système d'impression (200) comprend une pluralité de modules d'impression (220) disposés côte à côte le long d'une direction de transmission du support d'impression au-dessus de la plateforme de transport (100), et le système de glaçage (300) comprend une pluralité de modules de glaçage (320) disposés côte à côte le long de la direction de transmission du support d'impression au-dessus de la plateforme de transport (100), chaque module de glaçage (320) étant muni d'une paire de canaux d'impression à pleine largeur, chaque module de glaçage étant configuré pour diviser la glaçure en deux parties afin d'imprimer la glaçure depuis chacun de la paire de canaux d'impression à pleine largeur sur la même position de la surface du support d'impression respectivement ; **caractérisée en ce que** l'imprimante céramique comprend en outre un cadre de support (400) qui enjambe la zone d'impression (A) et la zone de glaçage (B) et est disposé au-dessus de la plateforme de transport (100), le système d'impression (200) comprend en outre un cadre de chariot d'impression (210) relié au cadre de support (400), le cadre de chariot d'impression (210) étant mobile en hauteur par rapport au cadre de support (400) dans la direction orthogonale à la plateforme de transport (100), les modules d'impression (220) étant reliés en parallèle au cadre de chariot d'impression (210) et étant configurés pour être entraînés simultanément par le cadre de chariot d'impression (210) pour se déplacer dans une direction orthogonale à la plateforme de transport ; le système de glaçage (300) comprend en outre un cadre de chariot de glaçage (310) relié au cadre de support (400), le cadre de chariot de glaçage (310) étant mobile en hauteur par rapport au cadre de support (400) dans la direction orthogonale à la plateforme de transport (100), et les modules de glaçage (320) étant reliés en parallèle au cadre de chariot de glaçage (310) et étant configurés pour être entraînés simultanément par le cadre de chariot de glaçage (310) pour se déplacer dans la direction orthogonale à la plateforme de transport (100).

2. Imprimante selon la revendication 1, **caractérisée en ce que** le système d'impression (200) comprend 7 à 9 modules d'impression (220) disposés côte à côte le long de la direction de transmission au-dessus de la plateforme de transport (100), le système de glaçage (300) comprend 3 à 8 modules de glaçage (320) disposés côte à côte le long de la direction de transmission au-dessus de la plateforme de transport (100), et chaque module de glaçage est pourvu d'une paire de canaux d'impression à pleine largeur.

3. Imprimante selon la revendication 1, **caractérisée en ce que** le cadre de chariot d'impression (210) est pourvu d'un cadre de levage d'impression (211), le cadre de support (400) est pourvu d'une première vis sans fin (410) qui supporte le cadre de levage d'impression (211) ; le cadre de chariot de glaçage (310) est pourvu d'un cadre de levage de glaçage (311), et le cadre de support (400) est pourvu d'une seconde vis sans fin (420) qui supporte le cadre de levage de glaçage (311).

4. Imprimante selon la revendication 3, **caractérisée en ce que** le cadre de support (400) est pourvu de deux premières vis sans fin (410) disposées à distance, et un premier mécanisme de transmission (411) utilisé pour transmettre une action synchrone est prévu entre les deux premières vis sans fin (410) ; le cadre de support (400) est pourvu de deux deuxièmes vis sans fin (420) disposées à distance, et un deuxième mécanisme de transmission (421) utilisé pour transmettre une action synchrone est prévu entre les deux deuxièmes vis sans fin (420).

5. Imprimante selon l'une quelconque des revendications 1 à 4, **caractérisée en ce que** des mécanismes d'adsorption à pression négative (500) sont prévus entre deux modules d'impression (220) adjacents ou deux modules de glaçage (320) adjacents ou entre les modules d'impression (220) et les modules de glaçage (320).
